# EUROPÄISCHE PATENTANMELDUNG

(11) **EP 2 163 461 A2**
(43) Veröffentlichungstag der Anmeldung: **17.03.2010**
(21) Anmeldenummer: 09011590.8
(22) Anmeldetag: 10.09.2009
(51) Int. Cl.: B62D 65/02, B66C 13/08, B66C 13/18, B66D 3/24

(54) **Verfahren und Montagegerät zum Positionieren von Komponenten an/in Fahrzeugen**

(30) Priorität: 10.09.2008 DE 102008044514
(71) Anmelder: Strödter, Wilhelm, 59071 Hamm (DE)
(72) Erfinder: Strödter, Wilhelm, 59071 Hamm (DE)
(74) Vertreter: Wablat, Wolfgang

(57) **Zusammenfassung**

Es wird ein Verfahren und ein Montagegerät zum Positionieren von Komponenten an und in Fahrzeugen, insbesondere an PKW-Montagebändern, vorgeschlagen, die die Nachteile die Robotersysteme aufweisen, vermeiden und flexible, kostengünstige Technik liefern, mit der die Montagetätigkeiten schnell und präzise manuell, halb- oder bei einigen Komponenten auch vollautomatisch durchgeführt werden können. Das erfindungsgemäße Verfahren läuft nach folgenden Schritten ab:

Mit einem schienengebundenen Manipulator (1) wird die zu positionierende Komponente mit einem Greifer (13) ergriffen, angehoben und zur Fahrzeug-Montagelinie gedreht. Etwa zeitgleich wird ein schienengebundenes Tast- und Leitfahrgerät (2) mit einem Laufwagen (15) und einer Abstandsmesseinrichtung (22) über die Karosserie des Fahrzeugs vor einem genau definierten KarosserieKonturpunkt (27) in die Montagelinie eingefahren. Das Fahrzeug in der Montagelinie fährt auf das Tast- und Leitfahrgerät (2) zu, bis die Abstandsmesseinrichtung (22) den Karosseriekonturpunkt erkannt hat. Der Abstand des erreichten Punktes in der laufenden Fahrzeug-Montagelinie zum Tast- und Leitfahrgerät (2) wird konstant gehalten und damit ein Abstandsanschlag (28) am Laufwagen des Tast- und Leitfahrgerätes (2) in eine feste Abstandsposition zur Karosserie gebracht, die dem Abstand zwischen dem Karosseriekonturpunkt und dem Zielpunkt entspricht, der Öffnung in der Karosserie für die zu positionierende Komponente. Der Laufwagen (3) des Manipulators (1) mit einem Ankoppelanschlag (29) wird gegen den Abstandsabschlag (28) gefahren und koppelt sich an das Tast- und Leitfahrgerät an. Die Komponente wird mit dem Manipulator gegen den als Lineal oder Kurvenlineal wirkenden Anschlag in die erforderliche Position in der Karosserie gebracht und in Ablagehöhe abgesenkt. Der Greifer (13) wird geöffnet und übergibt die Komponente an das Fahrzeug.

Mit dem Montagegerät können Komponenten vom Zuführungsplatz aufgenommen, zur PKW-Montagelinie gefahren, positioniert und verbaut werden. Die Montage kann an stehenden Montageplätzen und an laufenden Montagebändern erfolgen.

## Beschreibung

Die Erfindung betrifft ein Verfahren und ein Montagegerät zum Positionieren von Komponenten an und in Fahrzeugen, insbesondere an PKW-Montagebändern.

Mit dem Montagegerät können die Komponenten wie z. B. Reserverad, Räder, Türen, Sitze, Cockpit, Batterie, Schiebedach, Glasdach vom Zuführungsplatz vollautomatisch aufgenommen, vollautomatisch zur PKW-Montagelinie gefahren und positionsgenau positioniert und verbaut werden. Dieser Montageprozess kann sowohl an stehenden Montageplätzen wie auch an den üblichen kontinuierlich laufenden Montagebändern erfolgen.

Montagen von PKW-Komponenten in den PKW-Montagestraßen werden bisher von Werkern durch manuelles Heben und Handhaben erledigt. Um den Werker gewichtsmäßig zu entlasten, werden seit vielen Jahren immer mehr Hebehilfen, sog. Handhabungsgeräte oder Manipulatoren, eingesetzt. Diese Geräte besitzen einen Hubantrieb elektrisch-, pneumatisch- oder hydraulischer Art und lassen sich in der Höhe gesteuert oder kraftunterstützt verfahren. Die Verfahrwege in der horizontalen Ebene erfolgen in der Hauptsache durch kugelgelagerte Drehachsen oder kugelgelagerte Linienführungen. Bei größeren Gewichten und damit höheren Verschiebekräften werden diese Achsen auch antriebsunterstützt vom Werker über Drucktastensteuerung verfahren. Dabei ist immer der Werker der Denker und Lenker. Eine genaue Positionierung der PKW-Komponente ist vom Geschick des Werkers abhängig. Ebenso ist die Arbeitsgeschwindigkeit vom Leistungsvermögen des Werkers abhängig. Die Geräte müssen technisch so abgesichert sein, dass der Werker durch Fehlfunktion sich nicht gefährdet oder den PKW oder die PKW-Komponente nicht beschädigt.

In der Druckschrift EP 00 72 277 A ist ein Handhabungsgerät zur automatischen Scheibenmontage beschrieben, das über eine Greifeinrichtung mit daran angebrachten Sensoren verfügt. Die Grobpositionierung erfolgt über getrennte Sensoren in Form eines stationären mechanischen und zweier mitgeführter optischer Näherungsgeber. Für die Scheibenvermessung werden mitbewegte Abstandssensoren eingesetzt, die auf seitliche und geneigte bzw. gewölbte Karosserieflächen gerichtet sind. Diese Vorrichtung hat den Nachteil, dass sie den Scheibenausschnitt nur mittelbar über die angrenzenden Karosserieflächen erfasst. Dies führt zu erheblichen Ungenauigkeiten und bedingt einen großen Aufwand bei der Einrichtung des Systems.

Aus der Druckschrift DE 35 39 797 C2 ist ein Verfahren zur automatischen Scheibenmontage an Kraftfahrzeugen bekannt, wobei der Scheibenausschnitt über von einem Handhabungsgerät mit Greifeinrichtung für die Scheiben und mitbewegte Sensoren lage- und größenmäßig vermessen und in Abhängigkeit davon die Scheibe positioniert wird. An der Greifeinrichtung sind mindestens ein kantentastender Grobsensor und zwei oder mehr kantentastende Feinsensoren sowie ein Abstandssensor angeordnet. Der Scheibenausschnitt wird bei der Scheibenmontage durch Überfahren und Abtastung seiner Kanten erst grob und anschließend nach Korrektur des Steuerungsbezugspunktes fein vermessen. Für die Grobvermessung wird die Lage der freien Innenkanten des umlaufenden Karosseriefalzes und zum Feinvermessen die Lage der Stufen im Karosseriefalz abgetastet.

Bekannt sind aus der Druckschrift DE 33 42 570 A1 ein Verfahren und eine Vorrichtung zum Positionieren und Montieren von flächigen Teilen, insbesondere Türen, an Karosserien von Kraftfahrzeugen. Die zu montierende Tür wird an die Karosserie heranbewegt, wobei die Lage der Tür zur Karosserie über mindestens einen Tastfinger ertastet wird. Die Tür wird um drei Freiheitsgrade raumgelenkig gegen die Karosserie heranbewegt und bis zum körperlichen Kontakt zur Karosserie weiterbewegt. Außerdem wird die räumliche Lage der Tür in zwei verschiedenen, insbesondere senkrecht aufeinander stehenden Ebenen, zur Karosserie bestimmt und erst daraufhin ein Signal an den Industrieroboter, z. B. einen Schweißroboter, gegeben.

Nach den genannten und weiteren Druckschriften soll die Werker-Montagetätigkeit durch Robotersysteme ersetzt werden. Diese Robotersysteme haben den Vorteil, dass sie die PKW-Komponenten schnell transportieren und präzise positionieren können, jedoch haben sie folgende entscheidende Nachteile und konnten sich dadurch für die o. g. Montagetätigkeiten nicht durchsetzen. Sie sind in der Anschaffung zu teuer und in der Einführphase zu schwierig und zu zeitaufwendig bis die Programmparameter funktionieren. Bei einer technischen Störung ist gleich die komplette Bandlinie und weiter die komplette PKW-Fertigung betroffen und lahm gelegt. Die Fehlersuche ist bei technischen Störungen schwierig, zeitaufwendig und nur durch Spezialisten durchführbar. Die Roboterarbeitsbereiche müssen wegen Fehlfunktionen der Robotersteuerung und Roboterantriebe und somit außer Kontrolle geratene Bewegungen, sicherheitstechnisch durch Sicherheitszäune abgesperrt werden. Im Roboterarbeitsbereich dürfen sich somit keine Werker aufhalten, die andere Handhabungsarbeiten parallel erledigen müssen. Die Montagelinie muss deshalb für diese Tätigkeiten verlängert werden. Der Einsatz bei chaotischer Montage von z.B. zwei oder mehreren Kfz-Baureihen in einer Montagelinie ist wegen der Komplexität nicht möglich. Eine Umrüstung beim Modellwechsel ist zu aufwändig.

Die erfindungsgemäße Aufgabe besteht darin, ein Verfahren und ein Montagegerät zum Positionieren von Komponenten an und in Fahrzeugen vorzuschlagen, die die vorgenannten Nachteile vermeiden und flexible, kostengünstige Technik liefern, mit der die Montagetätigkeiten schnell und präzise manuell, halbautomatisch oder bei einigen Komponenten auch vollautomatisch durchgeführt werden können.

Das Problem wird durch die Merkmale der Ansprüche 1, 5 und 6 gelöst. Weiterbildungen der Erfindung sind in den abhängigen Ansprüchen enthalten.

Das erfindungsgemäße Verfahren zum Positionieren von Komponenten an Fahrzeugen in einer Montagelinie läuft nach folgenden Schritten ab:
- mit einem schienengebundenen Manipulator wird die zu positionierende Komponente mit einem Greifer ergriffen, angehoben und zur Fahrzeug-Montagelinie gedreht;
- etwa zeitgleich wird ein schienengebundenes Tast- und Leitfahrgerät mit einem Laufwagen und einer Abstandsmesseinrichtung über die Karosserie des Fahrzeugs vor einem genau definierten Karosseriekonturpunkt oder einem genau definierten Punkt zum Karosserietransportsystem in die Montagelinie eingefahren;
- das Fahrzeug in der laufenden Montagelinie fährt auf das Tast- und Leitfahrgerät zu, bis die Abstandsmesseinrichtung den definierten Punkt erkannt hat;
- der Abstand des erreichten Karosseriekonturpunktes oder des Punktes zum Karosserietransportsystems in der laufenden Fahrzeug-Montagelinie zum Tast- und Leitfahrgerät wird konstant gehalten;
- durch den konstant gehaltenen Abstand wird ein Abstandsanschlag am Laufwagen des Tast- und Leitfahrgerätes in eine feste Abstandsposition zur Karosserie gebracht, die dem Abstand zwischen dem definierten Punkt und dem Zielpunkt entspricht, der Öffnung in der Karosserie für die zu positionierende Komponente;
- der Laufwagen des Manipulators mit mindestens einem oder einem verfahrbaren Ankoppelanschlag wird gegen den Abstandsabschlag gefahren und koppelt sich an das Tast- und Leitfahrgerät an;
- die Komponente wird mit dem Manipulator gegen den als Lineal oder Kurvenlineal wirkenden Anschlag in die erforderliche Position an oder in der Karosserie gebracht und in Ablagehöhe abgesenkt;
- der Greifer wird geöffnet und übergibt die Komponente an das Fahrzeug.

Um das durch einen Werker handgeführte Verfahren in ein teil- oder vollautomatisches Verfahren umzuwandeln, müssen die Laufwagen des Manipulators und des Tast- und Leitfahrgerätes einen Antrieb erhalten.
Als Abstandsmesseinrichtung wird vorzugsweise ein mechanischer Abtastkopf eingesetzt. Eine berührungslose Abstandsmessung ist auch vorgesehen,
Der für das erfindungsgemäße Verfahren wichtige Karosseriekonturpunkt kann für mechanische Abtastung und eine berührungslose Abstandsmessung sowie bei unterschiedlichen Komponenten verschieden sein, Er muss auch bei laufender Fahrzeug-Montagelinie einen an der Karosserie klar erkennbaren, genau definierten Bezugspunkt für die Positionierung der Komponenten darstellen und muss vor dem Zielpunkt liegen, wobei der Zielpunkt einen genau definierten Abstand zum Karosseriekonturpunkt aufweist. Der Zielpunkt ist der Ausgangspunkt für das Ausfahren der Hubachseldes Hubzylinders des Manipulators mit der zu positionierenden Komponente. Ein Karosseriekonturpunkt bei einer mechanischen Abtastung muss einen in Bewegungsrichtung der Karosserie markanten Anstieg von der vorangegangenen Kontur aufweisen, wie die Übergänge zur Motorhaube, zum Frontscheibenausschnitt oder zur offenen Heckklappe. Der Zielpunkt ist die Stelle an oder in der Karosserie, an oder in der die Komponente positioniert werden soll. So wird das Reserverad durch die offene Heckklappe und ein Sitz oder das Cockpit durch die Türöffnung positioniert. Das Einfahren zum Zielpunkt wird häufig geradlinig wie an einem Lineal entlang erfolgen. Es kann aber auch in Stufen oder nach einer Kurve erfolgen. So wird das Positionieren eines Cockpits in der ersten Stufe geradlinig bis in die Türöffnung und dann nach vom erfolgen. Bei geringeren Anforderungen an die Genauigkeit der Positionierung kann als definierter Bezugspunkt für die Positionierung der Komponenten anstatt des Karosseriekonturpunktes auch ein genau definierter Punkt zum Karosserietransportsystem verwendet werden.

Die bevorzugte Variante des Montagegerätes zum Positionieren von Komponenten an Fahrzeugen in einer Montagelinie ist ausgehend von einem allgemein bekannten Manipulator erfindungsgemäß so ausgeführt, dass
- der schieriengeführte Laufwagen des Montagegerätes mindestens einen Arikoppelanschlag oder einen verfahrbaren Ankoppelanschlag sowie ein Ankoppelelement und
- ein Tast- und Leitfahrgerät einen schlenengeführten Laufwagen mit einem festen Abstandsanschlag und einem angeflanschten Kragarm, der am anderen Ende (18) einen etwa senkrechten, nach unten zeigenden Anschlagarm mit einer Aufnahme für einen Tastkopf zur mechanischen Abtastung der Fahrzeugkontur aufweist.

Eine weitere Variante des Montagegerätes ist erfindungsgemäß so ausgeführt, dass
- der Manipulator schienengeführt ist;
- ein Tast- und Leitfahrgerät aus einem schienengeführten Laufwagen mit einem angeflanschten Kragarm, der am anderen Ende ein etwa senkrecht nach unten gerichtetes Abstandsmesssystem zur berührungslosen Abstandsmessung der Fahrzeugkontur oder der Transportsystemkontur besteht;
- eine berührungslose Abstands-Sensorsteuerung des Abstandes zwischen dem Manipulator und dem Tast- und Leitfahrgerät angeordnet ist und
- eine Proportionalsteuerung für den Antrieb des Laufwagens des Manipulators vorhanden ist.

In Ausgestaltung der Erfindung umfasst das Ankoppelelement einen Vakuumsauger, einen Magneten oder eine Spannzange.

In weiterer Ausgestaltung der Erfindung umfasst die berührungslose Abstands-Sensorsteuerung eine Laserstrahl-, Infrarot-, Fotozellen- und Ultraschallmessung.

Das erfindungsgemäße System bietet folgende Vorteile:
es ist kostengünstig in der Anschaffung,
einfach in der Einführphase durch Halbautomation oder Vollautomation,
einfache Steuerung, die ohne spezielles Fachwissen einstellbar ist,
bei technischer Störung in der Vollautomation kann sofort mit dem System halbautomatisch weiter gearbeitet werden oder der Manipulator wird manuell vom Werker genutzt, wie die zur Zeit eingesetzten bekannten Systeme,
mit der Vollautomatik ist die Präzision gegeben,
es ist keine besondere Sicherheitstechnik erforderlich, da die Steuerung nicht außer Kontrolle geraten kann,
im Arbeitsbereich des Systems können sich Werker aufhalten und parallele Handhabungen erledigen,
die Montagegeschwindigkeit kann erhöht und Montagepersonal eingespart werden.

Die Erfindung wird nachfolgend an einem Ausführungsbeispiel näher beschrieben, Die zugehörigen Zeichnungen zeigen;
Fig. 1: das erfindungsgemäße Montagegerät
Fig. 2: die Drehlagerung mit einem Drehantrieb
Fig. 3: den Laufwagenantrieb über eine Reibradrolle
Fig. 4: den Laufwagenantrieb über ein Zahnrad und eine Zahnstange
Fig. 5: die Ankoppelstelle der Laufwagen mit Abstands- und Ankoppelanschlag
Fig. 6: die Ankoppelstelle der Laufwagen mit verfahrbarem Ankoppelanschlag
Fig. 7: das verbreiterte Tast- und Leitfahrgerät
Fig. 8: das Greifergestänge mit einem Greifer für ein PKW-Reserverad

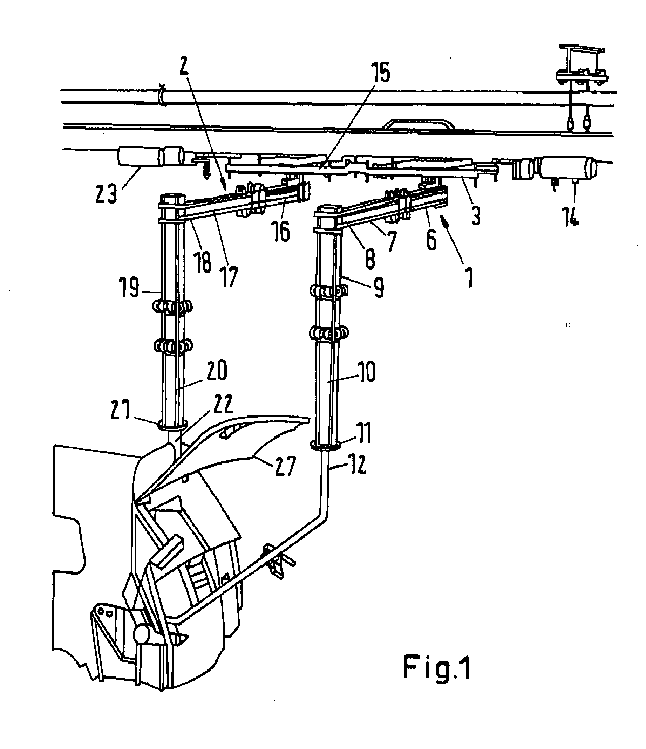

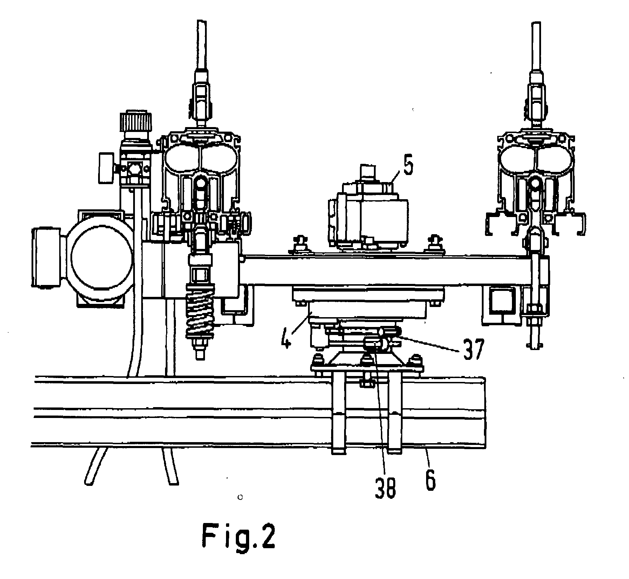

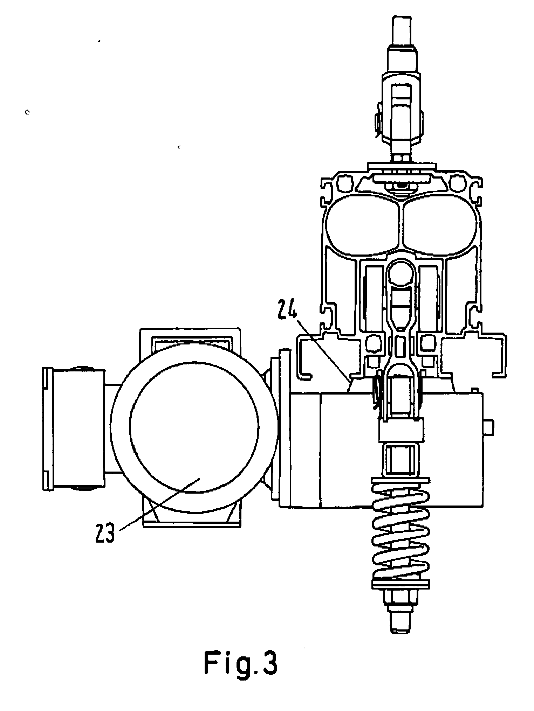

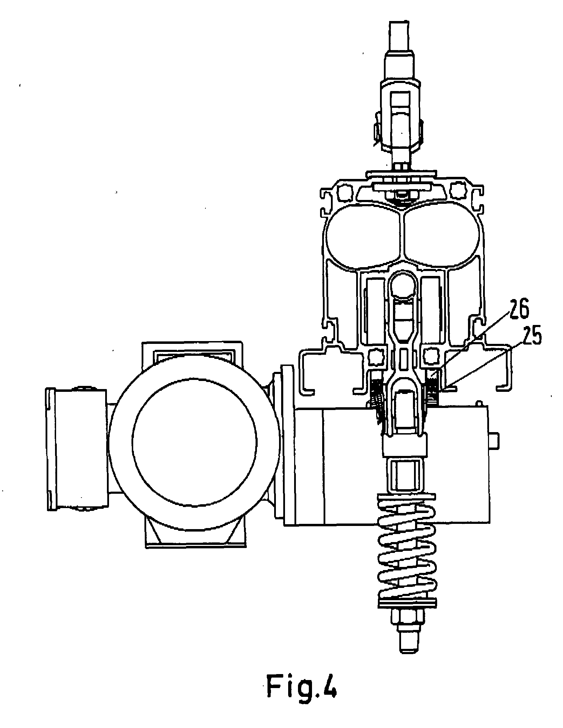

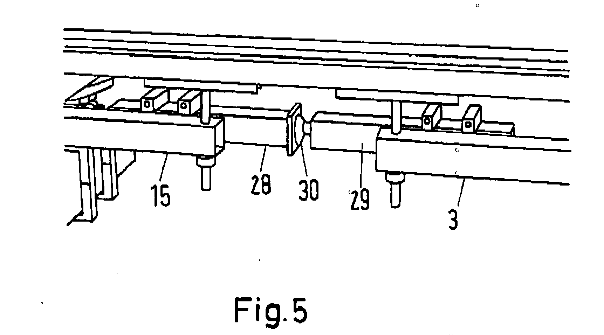

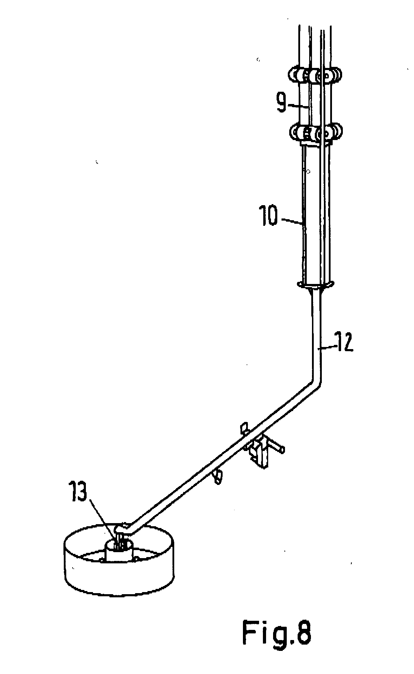

Das erfindungsgemäße Montagegerät besteht nach Fig. 1 aus einem, an sich bekannten handgeführten Manipulator 1 und einem Tast- und Leitfahrgerät 2, die entsprechend der Aufgabenstellung zu einem Automatiksystem in ihrem Aufbau technisch verändert und angepasst werden können.
Der Manipulator 1 weist gemäß Fig. 1 die Funktionskomponenten Laufwagen 3 mit einer am Laufwagen angeflanschten Drehlagerung 4, angetrieben mit Drehantrieb 5 mit angeflanscher, teleskopierbarer Hubachse 6 und verfahrbarem Hubzylinder 7 und einer am Kopfende 8 angeflanschten, senkrechten nach unten zeigenden, teleskopierbaren Hubachse 9 mit einem in der Höhe verfahrbaren Teleskoprohr 10 mit Aufnahmeflansch 11 zur Anflanschung des Greifergestänges 12 mit Greifer 13 auf. In Fig. 8 ist das Greifergestänge mit einem Greifer 13 für ein PKW-Reserverad dargestellt. Die Fig. 2 zeigt die Drehlagerung 4 mit einem Drehantrieb 5 und der Hubachse 6 im Detail. Die Drehanschläge 37, 38 können fest oder einstellbar sein. Verfahrbar ist der komplette Manipulator 1 über den am Laufwagen 3 angeflanschten Antrieb 14.
Das Tast- und Leitfahrgerät 2 besteht aus den Funktionskomponenten schienengeführter Laufwagen 15 mit einem auskragenden feststehenden oder teleskopierbaren Kragarm 16 , der auch ein Teleskop 17aufweisen kann, der am Laufwagen 15 angeflanscht ist. Am anderen Ende 18 des Kragarmes 16 ist ein senkrechter nach unten zeigender Anschlagarm bzw. Tastarm 19 angeordnet, der in der Höhe feststehend oder mittels eines Teleskoparms 20 veränderbar ist und einen Aufnahmeflansch 21 trägt. Angeflanscht an den Aufnahmeflansch 21 ist ein mechanischer Tastkopf 22.
Für den Einsatz an laufenden Montagebändern ist der Laufwagen 15 mit einem oder mehreren pneumatischen, hydraulischen oder elektrischen Antrieben 23 ausgerüstet, der über eine Reibradrolle 24, wie in Fig. 3 gezeigt, oder über ein Zahnrad 25 mittels Zahnstange 26, wie in Fig. 4 gezeigt, den Laufwagen 15 antreibt.
Die teleskopierbaren Teleskoprohre 7, 10, 17 und 20 können beim Manipulator 1 und Test- und Leitfahrgerät 2 mittels der Antriebe, die sich hierbei im Inneren der Teleskoprohre befinden und daher nicht sichtbar sind, verfahren werden.
Diese Antriebe können pneumatisch, hydraulisch oder elektrisch ausgeführt sein.
Der Tastkopf 22 dient der Abtastung des Teleskoparmes 19 zur PKW-Kontur 27, durch Kontakt oder kontaktlos, mittels Abstandsmesssystem, welches hier nicht weiter beschrieben ist.
Als weitere Variante zum Teleskoparm 19 ist auch die direkte kontaktlose Abstandsmessung mit einem Abstandsmesssystem oder ähnlicher Funktionsbauart möglich. Dadurch wird der Teleskoparm 19 eingespart.
Weiterhin ist, wie in Fig. 5 dargestellt, der Laufwagen 15 mit einem festen Abstandsanschlag 28 und der Laufwagen 3 mit einem Ankoppelanschlag 29, hier mit Ankoppelelement als Vakuumsauger 30, dargestellt.

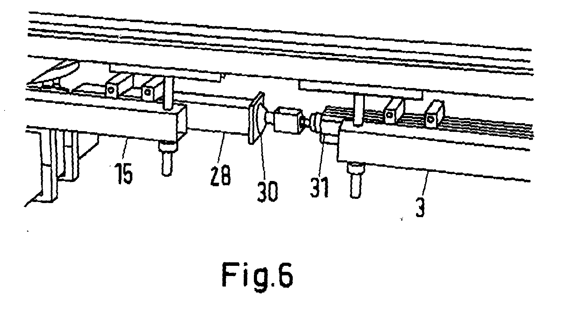

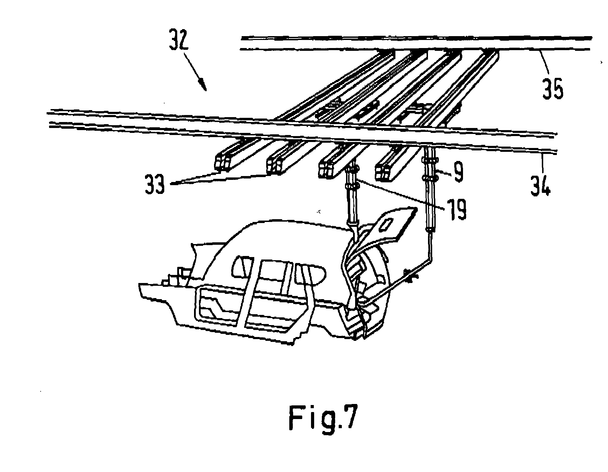

Statt des Vakuumsaugers 30 ist auch eine Ankoppelung mittels eines Magneten oder einer Spannzange denkbar.
Als weitere Variante können als Alternative zum Ankoppelanschlag 29 nach Fig. 6 ein oder mehrere verfahrbare Ankoppelanschläge 31 eingesetzt werden. Durch das Verfahren dieser Ankoppelanschläge 31 lassen sich verschiedene Positionierungspunkte oder auch Positionierungskurven herstellen.
Als mögliche weitere Variante gemäß Fig. 5 und 6 kann statt des Abstandanschlags 28 oder der Ankoppelanschläge 29 oder 31 der Abstand zwischen Manipulator 1 und dem Tast- und Leitfahrgerät 2 durch eine berührungslose Abstands-Sensorsteuerung gemessen und hergestellt werden. Der Markt bietet die unterschiedlichsten Systeme an, wie z.B. durch Laserstrahlmessung, Infrarotmessung, Fotozellenmessung, Ultraschallmessung usw. Die Abstandsmessung wird dann genutzt, um mittels Proportionalsteuerung und Antrieb 14 für den Laufwagen 3 zu steuern. Mit der Steuerung können die Abstandspositionen und Abstandskurven hergestellt werden, Das beschriebene Tast- und Leitfahrgerät 2 kann als weitere Variante als verbreitertes Tast- und Leitfahrgerät 32, wie in Fig. 7 gezeigt, ausgebildet werden. Anstelle des Kragarmes 16 können die Verbindungstraversen 33 als Träger für den nach unten zeigenden Anschlagarm 19 genutzt werden.
Statt der zwei Räderpaare 34, 35 links und rechts, wie in Fig. 7 gezeigt, sind auch zwei komplette Fahrwagen 15 denkbar, über die die Verbindungstraversen 33 verbunden sind.

Das erfindungsgemäße Montagegerät soll vorrangig automatisch die Montagevorgänge erfüllen. Bei Komponenten ohne Feinpositionierung wie z.B. beim Reserverad, oder bei der Batterie ist eine Vollautomatik möglich. Auch bei Komponenten mit Feinpositionierung und Zentriervorkehrungen (Hohlstifte / Hohlbohrungen) wie z.B. beim Schiebedach, Glasdach oder Cockpit ist die Vollautomatik möglich. Bei Komponenten mit Feinpositionierung und Spaltmaßbildung wie z.B. bei der Türenmontage mit den Zusatzarbeiten der Verschraubung und Kontaktierung der Kabel ist nur eine Halbautomatik möglich. Die Feinpositionierung in den letzten Milllmeterbereichen und auch die Verschraubung und Kontaktierung wird durch den Werker ausgeführt. Auch die Arbeitsvorgänge wie zusätzliche Fügepositionierungen wie z.B. Türenabschlagen kann nur halbautomatisch erfolgen, die dabei erforderlichen Übergabepositionierungen und das Setzen der Transportsicherungen in den Förderer kann nur von Werkerhand durchgeführt werden. Die Rädermontage kann wegen der Schraublochpositionierung und setzen der Schrauben auch nur halbautomatisch erfolgen. Bei halbautomatischen Handhabungsgeräten sollte mindestens der Rücktransport des Handhabungsgerätes zum Komponentenaufnahmeort vollautomatisch sein. Als zweite weitere Stufe ist die fixierte Aufnahme der Komponenten vollautomatisch auszulegen. Mit der dritten Stufe, das Anfahren und Vorpositionieren an die PKW-Karosserie ist die halbautomatische Aufgabe komplett erfüllt.
Manuelle Handhabungsgeräte werden nur noch dann eingesetzt, wenn der Einsatz von voll- und halbautomatischen Handhabungsgeräten nicht möglich ist oder keinen wirtschafitlichen Nutzen bringt.

Das erfindungsgemäße Verfahren wird am Beispiel einer Funktionsbeschreibung einer automatischen Montage für ein Reserverad beschrieben.
Der Manipulator 1 greift, wie in Fig. 8 gezeigt, das Reserverad mit dem Greifer 13 und hebt es mit der Hubachse 9 an. Dabei fährt das Teleskoprohr 10 in der Folge ein und in der weiteren Folge dreht der Drehantrieb 5 das Reserverad um 180° zur PKW-Montagelinie, wie in Fig. 1 gezeigt. Zeitgleich zu diesem Arbeitsablauf ist das Tast- und Leitfahrgerät 2 mit dem auskragenden Arm bzw. mit dem teleskopierbaren Kragarm 16, wie in Fig. 1 gezeigt, über den PKW in die Montagelinie eingefahren. In der Folge wurde der Anschlagarm 19 abgesenkt und dadurch der Tastkopf 22 in Höhenposition gebracht. Der PKW in der laufenden Montagelinie und der fahrende Laufwagen 15 fahren aufeinander zu, bis der Tastkopf 22 an der PKW-Heckklappe 27 Kontakt hat. Durch die Kontaktierung wird der Antrieb 23 abgeschaltet und die laufende Karosse schiebt das Tast- und Leitfahrgerät 2 vor sich her. Dadurch ist der Abstandsanschlag 28 in einer festen Abstandsposition zur Karosserie gebracht. Die Fig. 6 zeigt hier den Abstandsabschlag 28. Gegen diesen Abstandsabschlag 28 fährt jetzt der Laufwagen 3 und koppelt sich mit dem Vakuumsauger 30 an das Tast- und Leitfahrgerät 2 an. Das Reserverad befindet sich dadurch in Fahrtrichtung des Pkw's in seiner Einbauposition. In der Folge schiebt jetzt die Hubachse 6 gegen einen nicht dargestellten Festanschlag oder einen nicht dargestellten, einstellbaren Anschlag das Reserverad in die Karossenmittenposition, In der Folge senkt die Hubachse 9 in Ablagehöhe ab, der Greifer 13 öffnet und übergibt das Reserverad an den PKW.

Danach fahren alle Antriebe gesteuert in die Ausgangslage zurück. Der Montageprozess ist beendet, ein weiterer Montageprozess kann eingeleitet werden..

### Bezugszeichenaufstellung

- 1: Manipulator
- 2: Tast- und Leitfahrgerät
- 3: Laufwagen
- 4: Drehlagerung
- 5: Drehantrieb
- 6: Hubachse
- 7: Hubzylinder
- 8: Kopfende des Hubzylinders
- 9: Hubachse des Hubzylinders
- 10: Teleskoprohr
- 11: Aufnahmeflansch
- 12: Greifergestänge
- 13: Greifer
- 14: Antrieb
- 15: schienengeführter Laufwagen
- 16: Kragarm
- 17: Teleskop
- 18: Ende des Kragarms
- 19: Anschlagarm
- 20: Teleskoparm
- 21: Aufnahmeflansch
- 22: Tastkopf
- 23: Antriebe
- 24: Reibradrolle
- 25: Zahnrad
- 26: Zahnstange
- 27: PKW-Kontur
- 28: Abstandsanschlag
- 29: Ankoppelanschlag
- 30: Vakuumsauger
- 31: verfahrbarer Ankoppelanschlag
- 32: verbreitertes Tast- und Leitfahrgerät
- 33: Verbindungstraversen
- 34, 35: Radpaare
- 37, 38: Drehanschläge

## Patentansprüche

1. Verfahren zum Positionieren von Komponenten an Fahrzeugen in einer Montagelinie mit einem Manipulator, **dadurch gekennzeichnet, dass**
- mit einem schienengebundenen Manipulator (1) die zu positionierende Komponente mit einem Greifer (13) ergriffen, angehoben und zur Fahrzeug-Montagelinie gedreht wird;
- etwa zeitgleich ein schienengebundenes Tast- und Leitfahrgerät (2) mit einem Laufwagen (15) und einer Abstandsmesseinrichtung (22) über die Karosserie des Fahrzeugs vor einem genau definierten Karosseriekonturpunkt oder einem genau definierten Punkt zum Karosserietransportsystem in die Montagelinie eingefahren wird;
- das Fahrzeug in der laufenden Montagelinie auf das Tast- und Leitfahrgerät (2) zu fährt bis die Abstandsmesseinrichtung (22) den definierten Karosseriekonturpunkt oder den genau definierten Punkt zum Karosserietransportsystem erkannt hat;
- der Abstand des erreichten Punktes in der laufenden Fahrzeug-Montagelinie zum Tast- und Leitfahrgerät (2) konstant gehalten wird;
- durch den konstant gehaltenen Abstand ein Abstandsanschlag (28) am Laufwagen (15) des Tast- und Leitfahrgerätes (2) in eine feste Abstandsposition zur Karosserie gebracht wird, die dem Abstand zwischen dem Karosseriekonturpunkt oder dem Punkt zum Karosserietransportsystem und dem Zielpunkt, der Öffnung in der Karosserie für die zu positionierende Komponente, entspricht;
- der Laufwagen (3) des Manipulators (1) mit mindestens einem oder einem verfahrbaren Ankoppelanschlag (29, 31) gegen den Abstandsabschlag (28) gefahren wird und sich an das Tast- und Leitfahrgerät (2) ankoppelt;
- die Komponente wird mit dem Manipulator (1) gegen den als Lineal oder Kurvenlineal wirkenden Anschlag (29, 31) in die erforderliche Position an oder in der Karosserie gebracht und in Ablagehöhe abgesenkt;
- der Greifer (38) wird geöffnet und übergibt die Komponente an das Fahrzeug;

2. Verfahren nach Anspruch 1, **dadurch gekennzeichnet, dass** zur halb- und vollautomatischen Positionierung der Komponenten die Laufwagen (3,15) des Manipulators (1) und des Tast- und Leitfahrgerätes (2) mittels Antrieben (14, 23) verfahren werden.

3. Verfahren nach den Ansprüchen 1 und 2, **dadurch gekennzeichnet, dass** bei einer mechanischen Abstandsmesseinrichtung
- nach dem Einfahren in die Montagelinie ein Anschlagarm (19) mit einem Teleskoparm (20) oder Schwenkarm und einem mechanischen Tastkopf (22) abgesenkt und in Höhenposition gebracht wird;
- nach Erreichten des Karosseriekonturpunktes oder des Punktes zum Karosserietransportsystem der Antrieb (23) des Tast- und Leitfahrgerätes (2) abgeschaltet und durch die laufende Karosserie das Tast- und Leitfahrgerät (2) vor sich her geschoben wird;
- der Laufwagen (3) des Manipulators (1) gegen einen Abstandsabschlag (28) fährt und sich an das Tast- und Leitfahrgerät (2) ankoppelt.

4. Verfahren nach den Ansprüchen 1 und 2, **dadurch gekennzeichnet, dass** bei einer berührungslosen Abstandsmesseinrichtung die verschiedenen Abstandspositionen und Abstandskurven mittels Abstands-Sensorsteuerung durch Messung des erforderlichen Abstandes zwischen dem Manipulator (1) und dem Tast- und Leitfahrgerät (2) hergestellt und durch Proportionalsteuerung des Antriebs (14) des Laufwagens (3) konstant gehalten werden.

5. Montagegerät zum Positionieren von Komponenten an Fahrzeugen in einer Montagelinie mit einem Manipulator und einer Messeinrichtung, **dadurch gekennzeichnet, dass**
- der schienengeführte Laufwagen (3) des Montagegerätes (1) mindestens einen Ankoppelanschlag (29) oder einen verfahrbaren Ankoppelanschlag (31) sowie ein Ankoppelelement (30) und
- ein Tast- und Leitfahrgerät (2) einen schienengeführten Laufwagen (15) mit einem festen Abstandsanschlag (28) und einem angeflanschten Kragarm (16), der am anderen Ende (18) einen etwa senkrechten, nach unten zeigenden Anschlagarm (19) mit einer Aufnahme (21) für einen Tastkopf (22) zur mechanischen Abtastung der Fahrzeugkontur (27) aufweist.

6. Montagegerät zum Positionieren von Komponenten an Fahrzeugen in einer Montagelinie mit einem Manipulator und einer Messeinrichtung, **dadurch gekennzeichnet, dass**
- der Manipulator (1) schienengeführt ist;
- ein Tast- und Leitfahrgerät (2) aus einem schienengeführten Laufwagen (15) mit einem angeflanschten Kragarm (16), der am anderen Ende (18) ein etwa senkrecht nach unten gerichtetes Abstandsmesssystem zur berührungslosen Abstandsmessung der Fahrzeugkontur (27) oder der Transportsystemkontur besteht;
- eine berührungslose Abstands-Sensorsteuerung des Abstandes zwischen dem Manipulator (1) und dem Tast- und Leitfahrgerät (2) angeordnet ist;
- eine Proportionalsteuerurig für den Antrieb (14) des Laufwagens (3) vorhanden ist.

7. Montagegerät nach den Ansprüchen 5 und 6, **dadurch gekennzeichnet, dass** für einen halb- und vollautomatischen Betrieb an laufenden Montagebändern der Laufwagen(3) mindestens einen Antrieb (14) und der Laufwagen (15) einen oder mehrere pneumatische oder hydraulische oder elektrische Antriebe (23) aufweist.

8. Montagegerät nach Anspruch 7, **dadurch gekennzeichnet, dass** der Laufwagen (15) mittels Antrieben (23) über eine Reibradrolle (24) oder über ein Zahnrad (25) und ein Zahnstange (26) antreibbar ist.

9. Montagegerät nach den Ansprüchen 5 und 6, **dadurch gekennzeichnet, dass** der Kragarm (16) feststehend oder mit einem Teleskoprohr (17) teleskopierbar ist.

10. Montagegerät nach Anspruch 5, **dadurch gekennzeichnet, dass** der Anschlagarm (19) in der Höhe feststehend oder mit einem Teleskoparm (20) teleskopierbar ist.

11. Montagegerät nach den Ansprüchen 5 bis 10, **dadurch gekennzeichnet, dass** die Teleskoprohre (7, 10, 17 und 20) mittels pneumatischen, hydraulischen oder elektrischen Antrieben, die sich unsichtbar im Inneren der Teleskoprohre befinden, teleskopierbar sind.

12. Montagegerät nach den Ansprüchen 5 bis 11, **dadurch gekennzeichnet, dass** zur Herstellung verschiedener Positionierungspunkte oder Positionierungskurven als Ankoppelanschlag (29) ein oder mehrere verfahrbare Ankoppelanschläge (31) angeordnet sind.

13. Montagegerät nach den Ansprüchen 5 bis 12, **dadurch gekennzeichnet, dass** das Tast- und Leitfahrgerät (2) als verbreitertes Tast- und Leitfahrgerät (32) ohne Kragarm (16) mit Verbindungstraversen (33) als Träger für den Anschlagarm (19) ausgeführt ist.

14. Montagegerät nach Anspruch 13, **dadurch gekennzeichnet, dass** anstatt von zwei Räderpaaren (34, 35) links und rechts zwei, über Verbindungstraversen (33) verbundene, komplette Tast- und Leitfahrgeräte (2) angeordnet sind.

15. Montagegerät nach den Ansprüchen 6 bis 11, **dadurch gekennzeichnet, dass** mittels Proportionalsteuerung die Abstandspositionen und Abstandskurven herstellbar sind.
